# EUROPEAN PATENT APPLICATION

(11) **EP 1 391 722 A1**
(43) Date of publication of application: **25.02.2004**
(21) Application number: 02078280.1
(22) Date of filing: 09.08.2002
(51) Int. Cl.: G01N 23/22

(54) **Portable detection device and method for determining an element in a sample using Rutherford backscattering (RBS) and particle induced X-ray emission (PIXE)**

(71) Applicant: University of Liege, 4020 Liège (BE)
(72) Inventor: Carapelle, Alain, Université de Liège, 4031 Angleur (BE); Henrist, Marc, c/o Université de Liège, 4031 Angleur (BE)

(57) **Abstract**

A portable detection device and method for determining atomic elements in a sample using
an alpha particle source,
a first detector for measuring particle induced X-ray emission (PIXE),
a second detector for measuring Rutherford Back Scattering (RBS),
a first analyser, connected to said first detector, for generating a first presence signal respectively a first non detection signal of an atomic element,
a second analyser, connected to said second detector, for generating a second presence signal respectively a second non detection signal of said atomic element,
and a matching unit being provided for generating for each considered atomic element an acceptance signal if said matching unit received a first and a presence signal for the considered atomic element.

## Description

The invention relates to a portable detection device for determining an atomic element comprising:
- an alpha particle source, in particular a radio-active alpha Polonium 210 source, provided for producing a radiation beam of alpha particles to be directed to a sample to be analysed;
- a first detector provided for receiving induced electromagnetic radiation produced by said sample upon radiation by said source and for detecting a first energy spectrum from said received induced electromagnetic radiation;
- a second detector provided for receiving alpha particles which are scattered back due to Rutherford Back Scattering (RBS) by said sample and for detecting a second energy spectrum from said scattered alpha particles;
and a method for determining an element in a sample.

For determining directly and rapidly an atomic element it is known to use Particle Induced X-ray Emission (PIXE). The sample to be analysed is submitted to particles produced by a particle accelerator or a radioactive source having a strong activity. For safety reasons (radiation exposure), α particles excitation is preferred. The interaction between the emitted particles and the atom targets of the sample induces an X-ray spectrum, wherein different energy levels correspond to the constituing atoms of the sample to be analysed.

In operation, the samples to be analysed are thus irradiated in order to cause them to fluoresce and the resulting fluorescent X-ray radiation is then analysed with a detector having a data acquisition chain which includes a multichannel analyser. The multichannel analyser builds up a spectrum representing the energy distribution of the fluorescent radiation. The obtained energy spectrum will correspond to the elemental composition of the sample.

One of the advantages offered by using an α particle source, is to obtain the Rutherford Back Scattering (RBS) as another detectable effect. An alpha particle detector measures the energy of alpha particles which are back scattered (180° scattering geometry) by the sample. The amount of energy lost in the collision with the atomic nuclei depends upon Z. The energy of back scattered alpha particles increases with Z, as well as the number of back scattered alpha particles.

Some spectrometers include both detectors, each producing a different spectrum. By comparing the produced spectra, the user can determine the atomic composition of the sample. Unfortunately, the intervention of a specialist is required for analysing the spectra, which is usually very expensive.

The object of the present invention is therefore to provide a portable detection device allowing to induce with a single device a PIXE and RBS spectrum from a sample and to determine the presence of atomic elements in that sample without necessarily using a specialist .

The device according to the present invention is therefore characterised in that said portable detection device further comprises:
- a first analyser, connected to said first detector and comprising a first memory provided for storing for each of a predetermined number of atomic elements a theoretical PIXE energy level value, said first analyser being provided for integrating said first energy spectrum in order to determine a first series of first energy level values, to each of said first energy level values within said first series there belonging a first level intensity value, said first analyser being further provided for selecting for each predetermined atomic element, a first energy range based on said theoretical PIXE energy level value of the considered atomic element, said first analyser being also provided for applying for each considered element a predetermined PIXE threshold to said first energy spectrum and for verifying for each first energy range if said first level intensity value is higher than or equal to said PIXE threshold and for generating a first presence signal respectively a first non detection signal, if said first level intensity value is higher or equal respectively lower than said PIXE threshold, and for transmitting, for each considered element, said first presence signal respectively said first non detection signal to a matching unit;
- a second analyser, connected to said second detector and comprising a second memory provided for storing for each of said predetermined number of atomic elements, a theoretical RBS energy level value, said second analyser being provided for integrating said second energy spectrum in order to determine a second series of second energy level values, to each of said second energy level values within said second series there belonging a second level intensity value, said second analyser being further provided for selecting for each predetermined atomic element, a second energy range being based on said theoretical RBS energy level value of the considered atomic element, said second analyser being also provided for applying for each considered element a predetermined RBS threshold to said second energy spectrum and for verifying for each second energy range if said second level intensity value is higher than or equal to said RBS threshold and for generating a second presence signal respectively a second non detection signal, if said second level intensity value is higher or equal respectively lower than said RBS threshold for transmitting, for each considered element, said second presence signal respectively said second non detection signal to a matching unit; and
- said matching unit being provided for generating for each considered atomic element an acceptance signal if said matching unit received a first and second presence signal for the considered atomic element.

The collision between the sample and the alpha particles will produce two phenomena detectable by the first detector and the second detector respectively. The first phenomenon is the production of an induced electromagnetic radiation by the sample. This induced electromagnetic radiation, in particular X-rays, originates directly from the sample atoms hit by the α particles.

The second phenomenon is the Rutherford back scattering in which the α particles will be returned, approximately according to a 180° angle with respect to the incident direction of the α particles. The energy loss due to these collisions depends directly of the Z number of the hit atoms. The energy of the backscattered α particles will also be directly dependent from the atoms within the sample.

The first detector is connected to the first analyser comprising the first memory which is provided for storing for each of a predetermined number of atomic elements a theoretical level value. The first analyser receives a PIXE signal for each detected induced electromagnetic radiation, this PIXE signal corresponds to a detected first energy spectrum of the sample atom.

The first analyser, receiving each PIXE signal, stores them into the a first memory and at the end of the detection period, processes the first energy spectrum in order to determine a first series of first energy level values. To each of the first energy level values within the first series there belonging a first level intensity value, the first level intensity value corresponding directly , for each energy level, to the amount of induced electromagnetic radiation detected by the first detector. Moreover, the first memory comprises also for each of a predetermined number of atomic elements a theoretical PIXE energy level value.

The first analyser also selects, for each predetermined atomic element, a first energy range based on the theoretical PIXE energy level value of the considered atomic element. So, in each first energy range, the first analyser can apply a predetermined PIXE threshold. The first analyser can verify for each first energy range if said first intensity level value is higher than or equal to the PIXE threshold. If the first level intensity value is higher or equal respectively lower than the PIXE threshold, then the first analyser generates a first presence signal respectively a first non-detection signal and transmits it, for each considered element, to a matching unit.

In the same manner, the second detector is connected to a second analyser comprising a second memory provided for storing for each of the predetermined number of atomic elements, a theoretical RBS energy level value. The second detector is thus provided to receive the back scattered α particles. The backscattered α particles reach the second detector each with a particular energy level of the spectrum depending on the hit atom.

The second analyser receiving each energy level, processes the latter in order to determine a second series of second energy level values, to each of said second energy level value within said series there belonging a second level intensity value.

As described for the first detector, the second analyser selects for each predetermined atomic element a second energy range and applies a RBS threshold in order to verify, for each energy range, if the second level intensity is higher than or equal to the RBS threshold. The second analyser generates and transmits a second presence signal respectively a second non-detection signal to a matching unit for each second energy range if the second level is higher or equal, respectively lower, than the RBS threshold.

The matching unit will generate a first expectation signal upon receipt of a first presence and second non detection signal from the first and second analyser for the same considered atomic element. The matching unit will generate a second expectation signal upon receipt of a first non-detection and second presence signal for the same considered atomic element. But the matching unit generates an acceptance signal upon receipt of a first and second presence signal from respectively the first and second analyser. Therefore the matching unit can rapidly give an information on the presence of one or more elements in the sample. In such a manner an operator, using the portable detection device of the present invention, knows rapidly if the sample comprises one or more of the predetermined atomic elements.

According to another embodiment of the present invention, the portable detection device is furthermore characterised in that said matching unit is provided to generate, for each considered atomic element a non acceptance signal if said matching unit received a first and second non detection signal. So, the matching unit can also determine if a predetermined atomic element is not present in the sample.

The alpha particles source according to the invention is a radioactive source that is emitting alpha particles and whose half-life is more than ten days (as for example : Samarium 146, Curium 242, ... ).

The invention will be described in more details hereinafter by illustrating in the appended drawings preferred embodiments of the invention.

In the drawings:
- Fig. 1 (a and b) schematically show an exploded view of the detector as part of the device according to the present invention;
- Fig. 2 shows a block diagram illustrating the treatment of first and second energy levels according to the present invention;
- Fig. 3 shows a PIXE spectrum analysed by the portable detection device.

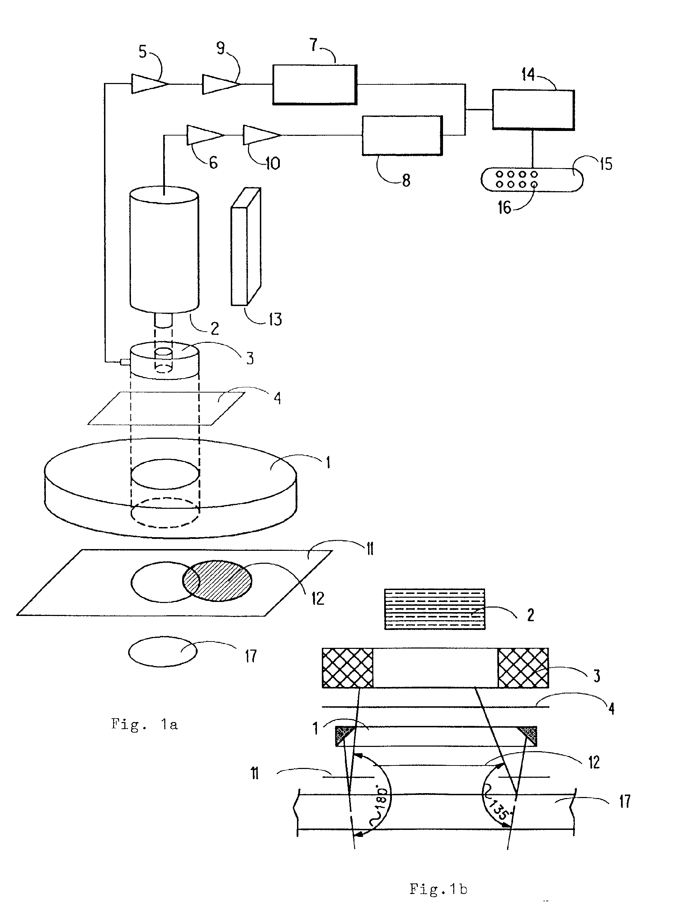

Referring to Fig. 1, the portable detection device according to the invention comprises a radioactive source 1 such as, for example, a source described in the French patent 2.779.865 which is hereby included by reference. This radioactive source is an alpha polonium 210 source having an annular shape allowing the detectors to be placed along an axis crossing the centre of the source. The portable detection device of the present invention comprises a first (2) and a second detector (3), both being placed inside the ring formed by the radioactive source. The first detector is an X-ray detector whereas the second detector is an α particle detector provided for measuring the kinetic energy of the detected α particles. The second detector (3) has also an annular shape. Its outer face can be protected against incident light waves by an opaque Mylar sheet 4, which allows the induced X-rays and back scattered α particles to reach the detectors. The second detector is, for example, a passivated implanted planar silicon detector based on 3 µm CMOS technology with a resolution in terms of FWHM ( Full Width at Half Maximum) less than 17 kev for an active area detector of 450 mm², or the like.

The first detector (2) is located in the ring center of the second detector. This first detector can for example be a silicon drift detector with on-chip electronics for X-ray spectrometry with a high resolution in terms of FWHM of the Mn-Kα at 5.9 kev with less than 168 eV. Preferably, this detector is cooled by a Peltier element in order to increase his resolution and/or by a fan (13), which avoids the use of a coolant.

Each detector comprises a pre-amplifier (5,6) connected to a first respectively second multi-channel analyser (7,8) via an amplifier (9,10). Those amplifiers are connected to a processor (14) having an input connected to a keyboard (15).

In order to calibrate both detectors, the portable detector device comprises an obturating system (11) having a movable plate (12) covered by a coating and placed under the source (1). The coating comprises an atomic coating having first and second energy spectra which are specific to that coating atom as it will be described hereinafter. The coating will be selected in function of the element or elements which have to be detected. For example, for a detection of tributyltin (TBT) in paint (as sample 17), the coating can include tin in order to autocalibrate the portable detection device on basis of at least the tin spectrum. Furthermore, the obturating system, when used in closed position, can also protect the detectors and reduce operator exposure to alpha particles.

Moreover, as illustrated in Fig. 1b, the α-particle source and the detectors are placed very close to each other, so as to have, between the incident α particles direction and the induced X-ray direction, an angle of approximately 135°, and an angle less than 180° between the incident α particle direction and the back scattered α particles direction. Moreover, the first and second detectors are linked to a first and second analyser, respectively.

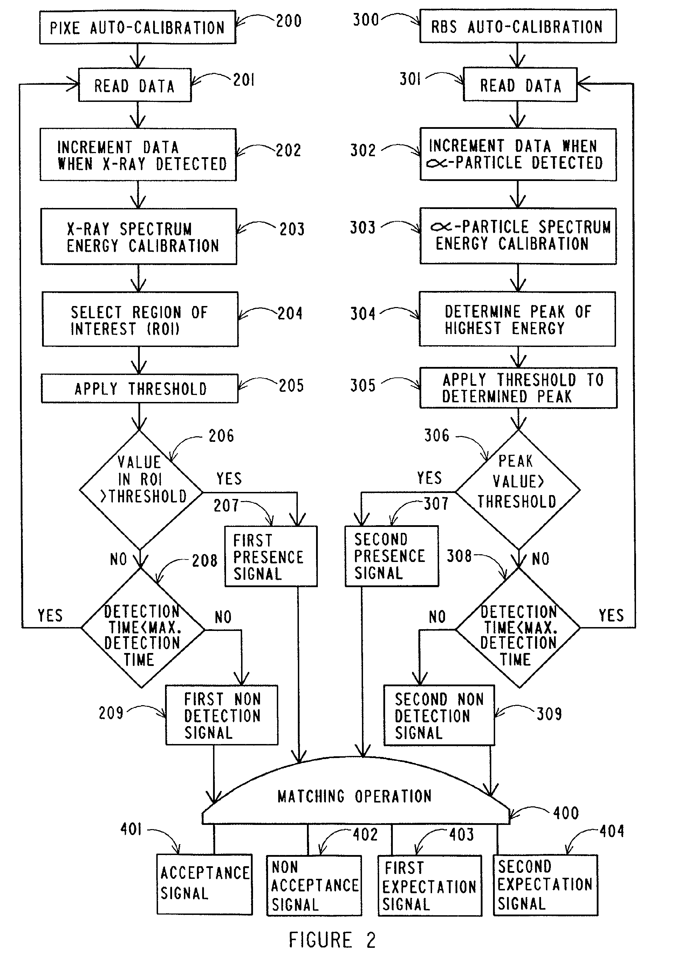

The operation of the device according to the present invention will now be described with reference to Fig. 2. As described with reference to Fig. 1, the auto-calibration element comprises a movable plate (12) which is part of the obturating system (11). The plate is covered by a coating, for example Au+Sn. This auto-calibration element is provided for being placed in front of the first and second detector, before starting the detection procedure. Since the auto-calibration (200, 300) of the portable detector device operates according to the same principle as the detection procedure, only the auto-calibration procedure will be described.

In order to detect atomic elements present in a sample (17) to be analysed, the first and second analysers extract (201, 301) from their memory, which are part of the first and second analyser, a first and second structure having a predetermined number of columns, each column corresponding to a predetermined range of energy levels. For example, the extracted structure can be a table with 4096 columns, each column having a range of 0.5 eV. The total range of the table is, for example comprised between 1000 eV and 3048 eV. To each column of the table there is associated a value field provided for storing a value indicating the number of impacts detected by the detector during a predetermined period of time and having an energy situated within the energy range of the associated column. The predetermined range of the first and second table could be different as well as the number of columns of both tables.

According to another embodiment of the present invention, the first and second analyser can generate a first and a second table, the number of columns depending on the required resolution.

During the detection period, each time an incident X-ray is detected by the first detector, the latter determines the energy value of the incident ray and depending of the detected energy value, the first analyser increments (202) by 1 the value in the column corresponding to the detected energy level. Once the detection is completed, the obtained value in each column corresponds to the intensity level value. For example, when an induced X-ray hits the first detector with energy level of 2000.1 eV, the first analyser records an impact and increments by 1 the value in the column corresponding to an energy comprised between 2000 eV and 2000.5 eV. For example, at the end of a detection period of 50 seconds, column X has a value of 200, the intensity value will thus be of 200 impacts divided by 50 seconds, which means 4 impacts per second. In the same manner as the one explained in the steps 200 to 203, the second detector determines, every time an incident α particle is detected, the energy value of the incident α particle and the second analyser increments (302) by 1 the value in the column corresponding to the detected energy level.

Once the tables have been recorded, the analysers compare the first and second built up tables with a theoretical first and second tables representing the intensity values of the coating and which are stored in the first and second memories. Thereafter, the first and second analysers perform a fitting operation according to a least mean square method and using a first and a second calibration parabola. These parabolas are generated according to a mathematic formula E= ax² + bx + c where E is the energy of the X-rays or α-particles, x is the number of the column and a,b and c are the coefficients required for fitting purpose with the measured values. Reference points which are used to make the fitting, correspond to the considered peaks tops. The considered peaks are generally the peaks of the elements to be detected. For example, in case of the tributyl tin detection, the considered peaks will be the tin peaks. So, both analysers will determine (203, 303) the first and a second calibration parabola on each first and second series of first and second energy level value. Such a fitting method is for example described in by Sven A.E Johansson, John L. Cambell and Klas G. Malmqvist in Particle Induced X-Ray Emission Spectrometry (PIXE), p.44 Ch.2.4.2. by John Wiley and Sons, (Wiley-Interscience publication1995), in volume 133 in Chemical Analysis.

Additionally, the portable detection device can also perform an autocalibration based on one or more atmospheric elements such as Argon. In the latter case, the theoretical first and second tables comprise also the theoretical energy spectrum of Argon.

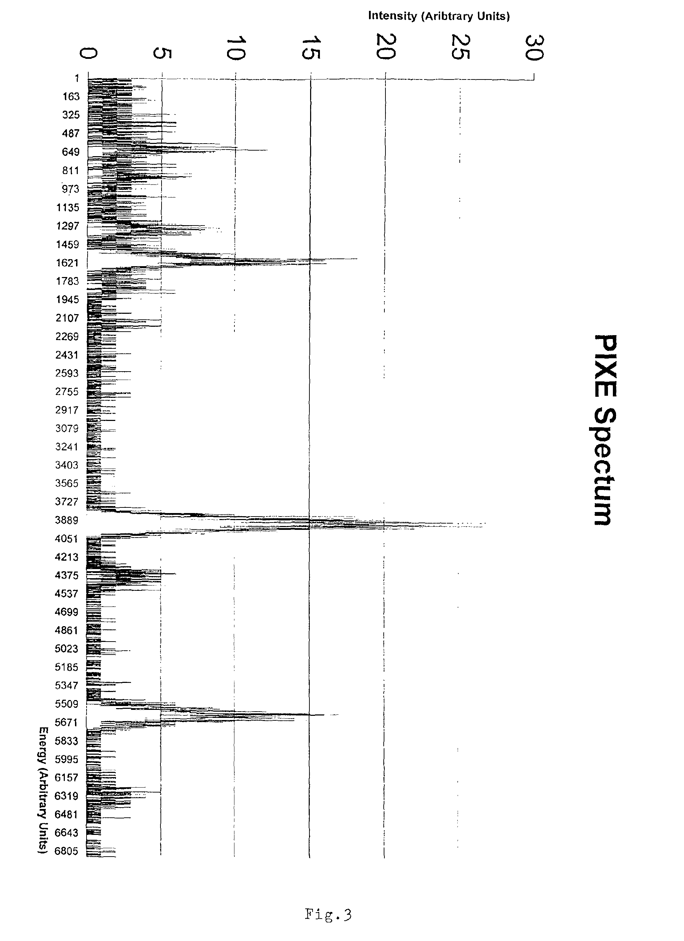

According to a preferred embodiment of the present invention as illustrated in Fig. 3, the sample analysis can be focused on a predetermined part of the first and second spectra. For example, when a user desires to detect a predetermined element, such as tin in paint with tributyltin, the portable detection device can be provided for analysing, for each spectrum, only a set of predetermined ranges in which the peaks of the predetermined element are susceptible of being detected. In this case, the coating of the calibrating plate can be covered by the predetermined element to be detected in order to obtain a better calibration.

Moreover the first analyser can select (204) for each predetermined atomic element, a first energy range based on said theoretical PIXE energy level value of the considered atomic element in order to apply (205) for each considered atomic element a predetermined PIXE threshold to said first energy spectrum. The predetermined thresholds can be equal to a minimum detection value of the detector or be higher, so as to remove unwanted signal components.

Moreover, the portable detection device can also be provided for removing the detection signals of the incident X-rays or α-particles coming directly from the α sources without having been scattered by sample.

In order to determine the presence of a predetermined atomic element, the first analyser verifies (206) for each energy range if said first level intensity value is higher than or equal to said PIXE threshold. The first analyser generates (207) a first presence signal if the first level intensity value is higher than or equal to the PIXE threshold. If the first level intensity value is lower than the threshold, the analyser will verify (208) if the detection time is lower than the detection maximum time. In the case where the detection time is equal to the detection normal time the first analyser generates (209) a first non presence signal. If the detection time is lower than the maximum detection time, the first analyser continue data acquisition ( 201).

Moreover, if a user desires to detect a particular element in the sample to be analysed and if such element has not been detected after a first spectrum analysis, the user could lower the threshold in order to make more peaks visible.

In the same manner as the one explained in the steps 200 to 203, the second analyser processes the second set of second energy levels, in order to determine a second calibrating parabola and applies the second calibrating parabola in the steps 300 to 303.

According to the principle that the number of the back scattered α particles and alpha particle kinetic energy increase with Z, the second analyser determines (304), based on (305) a second predetermined RBS threshold, the second energy level value having the highest second level intensity value in order to determine a highest atomic element of the sample. In the same manner, if there is more than one predetermined atomic element to be analysed, the second analyser can determine another second energy level value having a second level intensity value just lower than the highest second level intensity value in order to determine a second atomic element. This procedure can be continued so as to determine all the predetermined atomic elements.

For each determined atomic element, the second analyser will generate (307) a second presence signal, whereas for each predetermined atomic element which has not been determined by the second analyser, the latter generates a second non detection signal.

If the second analyser has not been able to determine (306) all of the predetermined atomic elements, then it verifies (308) if the detection time is equal to the maximum detection time. In case where the detection time is equal to the maximum detection time, the second analyser generates (309), for each predetermined atomic element which has not been determined, a second non detection signal. If the detection is lower than the set maximum time, the second analyser continue data acquisition.

All the presence signals or non-detection signals, after being generated, are submitted (400) to a matching operation. During the latter for each considered atomic element an acceptance signal is generated (401) if a first and second signal for the considered atomic element have been received.

Moreover, the matching unit can generate (402), for each considered atomic element a non acceptance signal if said matching unit receives a first and second non detection signal. The matching unit can also generate (403) for each considered atomic element a first expectation signal, if the matching unit received a first presence signal and a second non detection signal for the considered atomic element, and, (404) a second expectation signal if the matching unit received a second presence signal and a first non detection signal for the considered atomic element.

For example, if only two predetermined atomic elements must be analysed, such as Sn and Au, and the first analyser has determined the presence of Sn and Au, a first presence signal for Sn has generated and for Au a second presence signal has been generated, whereas the second analyser has generated for Sn a second non detection signal and for Au a second presence signal. After the treatment of these signals by the matching unit, the latter generates for Sn a acceptance signal and for Au a first expectation signal.

As illustrated in Fig. 1, these results of the matching unit (14) can be proposed to an operator via an interface (15) such as a screen or a predetermined number of Leds (16). For example, the portable detection device, in this case, is used for detecting only two atomic elements in a sample. The interface can have only two series of Leds, each series corresponding to an atomic element and comprising for example four Leds: each of the four Led lights up respectively when the matching unit transmits an acceptance signal, a non acceptance signal, a first expectation signal and a second expectation signal. The portable detection device of the present invention can be used in environmental detection, in analysis of coatings, alloys, paints, emission of gas, slurries,...

## Claims

1. A method for determining an element in a sample said method comprising:
a. irradiating said sample by means of an alpha particle source in order to induce an emission of X-rays and back scattering of α particles;
b. extracting from said first and second analyser, a first and second table structure having a predetermined number of columns, each column corresponding to a predetermined energy level range;
c. associating to each column a value field provided for storing a value indicating the number of impacts detected by the respective detectors, during a predetermined period of time;
d. calibrating said first and second detector by using an emission induced by a reference in order to obtain using said table structure, a first and a second calibration table;
e. detecting the induced emission by means of a first and a second detector respectively, each detector having a first and a second analyser able to analyse a first and second energy spectrum;
f. analysing said detected induced emission by verifying, for each of said energy level ranges, whether an impact of such induced emission having an energy level corresponding to the considered energy level range occurred, and if said impact occurred;
g. incrementing the intensity value into said column corresponding to the considered range in which the impact occurred in order to build up said first and second spectrum;
h. selecting, by said first respectively second analyser and for each predetermined atomic element, a first respectively second range based on a theoretical PIXE energy level value respectively a theoretical RBS energy level value of the considered atomic element;
i. applying, for each considered atomic element, a predetermined PIXE threshold respectively a predetermined RBS threshold to said first and second spectrum;
j. verifying by said first and second analysers, for each energy range if said first and second level intensity value is higher than or equal to the PIXE threshold respectively the RBS threshold;
**characterized in that** said method further comprises:
k. generating by the first respectively the second analyser a first and a second presence signal if the first respectively the second level intensity value respectively is higher than or equal to the PIXE threshold respectively the RBS threshold;
I. sending said a first and a second presence signal to a matching unit;
m. generating by said matching unit for each considered atomic element, an acceptance signal if said matching unit received a first and second presence signal for the considered atomic element.

2. A method as claimed in claim 1, **characterised in that** the reference used includes at least one element susceptible of being present in the sample.

3. A portable detection device for determining an atomic element comprising
- an alpha particle source, in particular a radioactive alpha Polonium 210 source, provided for producing a radiation beam of alpha particles to be directed to a sample to be analysed :
- a first detector provided for receiving induced electromagnetic radiation produced by said sample upon radiation by said source and for detecting a first energy spectrum from said received induced electromagnetic radiation;
- a second detector provided for receiving alpha particles which are scattered back due to Rutherford Back Scattering (RBS) by said sample and for detecting a second energy spectrum from said scattered alpha particles;
**characterised in that** said portable detection device further comprises :
- a first analyser, connected to said first detector and comprising a first memory provided for storing for each of a predetermined number of atomic elements a theoretical PIXE energy level value, said first analyser being provided for integrating said first energy spectrum in order to determine a first series of first energy level values, to each of said first energy level values within said first series there belonging a first level intensity value, said first analyser being further provided for selecting for each predetermined atomic element, a first energy range based on said theoretical PIXE energy level value of the considered atomic element, said first analyser being also provided for applying for each considered element a predetermined PIXE threshold to said first energy spectrum and for verifying for each first energy range if said first level intensity value is higher than or equal to said PIXE threshold and for generating a first presence signal respectively a first non detection signal, if said first level intensity value is higher or equal respectively lower than said PIXE threshold, and transmitting, for each considered element, said first presence signal respectively said first non detection signal to a matching unit;
- a second analyser, connected to said second detector and comprising a second memory provided for storing for each of said predetermined number of atomic elements, a theoretical RBS energy level value, said second analyser being provided for integrating said second energy spectrum in order to determine a second series of second energy level values, to each of said second energy level value within said series there belonging a second level intensity value, said second analyser being further provided for selecting for each predetermined atomic element, a second energy range being based on said theoretical RBS energy level value of the considered atomic element, said second analyser being also provided for applying for each considered element a predetermined RBS threshold to said second energy spectrum and for verifying for each second energy range if said second level intensity value is higher than or equal to said RBS threshold and for generating a second presence signal respectively a second non detection signal, if said second level intensity value is higher or equal respectively lower than said RBS threshold for transmitting, for each considered element, said second presence signal respectively said second non detection signal to a matching unit;
- said matching unit being provided for generating for each considered atomic element an acceptance signal if said matching unit received a first and second presence signal for the considered atomic element.

4. A portable detection device as claimed in claim 3, **characterized in that** said matching unit being provided for each considered atomic element for generating a non acceptance signal if said matching unit received a first and second non detection signal.

5. A portable detection device as claim in claim 3, **characterized in that** said matching unit is provided for each considered atomic element for generating a first expectation signal, if said matching unit received a first presence signal and a second non detection signal for the considered atomic element, and, a second expectation signal if said matching unit received a second presence signal and a first non detection signal for the considered atomic element.

6. A portable detection device as claimed in anyone of the claims 3-5, **characterized in that** it comprises a calibrating material formed by a predetermined number of atomic elements, said calibrating material being provided for being radiated by said alpha particle source in order to produce an induced radiation detectable by said first and second detector respectively, said first and second detector being provided for detecting a first set of first calibrating energy levels and a second set of second calibrating energy levels respectively, said first and second analyser comprising a first set of first theoretical energy levels and a second set of second theoretical energy levels and a calibrating parabola said first and second analyser being provided for matching said theoretical and calibrating energy levels and for modifying said calibrating parabola based on said matching between said theoretical and calibrating energy levels in order to adjust said first and second set of calibrating energy levels on said first and second set of theoretical energy levels.

7. A portable detection device as claimed in claim 6 **characterized in that** said calibrating material is formed by at least atmospheric Argon.

8. A portable detection device as claimed in anyone of the claims 3-7, **characterised in that** it comprises an interface provided for receiving said signals generated by said matching unit.

9. A portable detection device as claimed in anyone of the claims 3-8, **characterised in that** said first and second analysers are multi-channel analysers provided for analysing a plurality of energy channels wherein said energy levels occur.

10. A portable detection device as claimed in anyone of the claims 3-9, **characterised in that** said first and second analysers are provided for recognising among said first and second energy spectrum those produced by heavy metals present in said sample.

11. A portable detection device as claimed in anyone of the claims 3-10, **characterised in that** said second detector is positioned approximately 180° with respect to an incident radiation beam generated by said alpha particles source.

12. A portable detection device as claimed in anyone of the claims 3-11, **characterised in that** said first detector is positioned approximately 135° with respect to an incident radiation beam generated by said alpha particles source.

13. A portable detection device as claimed in anyone of the claims 3-12, **characterised in that** said first detector is a silicon drift detector with on-chip electronics for X-ray spectrometry with a high energy resolution in terms of FWHM (Full Width at Half Maximum) of the Mn-Kα at 5.9 keV with less than 168 eV at room temperature (20°C).

14. A portable detection device as claimed in anyone of the claims 3-13, **characterized in that** said second detector is a passivate implanted planar silicon (PIPS) detector, based on 3 µm CMOS technology with a resolution in terms of FWHM less than 17 keV for a active area detector of 450 mm².

15. A portable detection device as claimed in anyone of the claims 3-14, **characterized in that** said alpha particles source is a radioactive source that is emitting alpha particle and whose half-life is more than ten days.
